# EUROPEAN PATENT SPECIFICATION

(11) **EP 3 480 268 B1**
(45) Date of publication and mention of the grant of the patent: **13.09.2023**
(21) Application number: 16907369.9
(22) Date of filing: 15.11.2016
(51) Int. Cl.: C09D 5/16, C09D 133/02, C09D 7/61, C09D 7/63, C09D 133/06, C09D 7/40

(54) **ANTIFOULING COATING COMPOSITION, ANTIFOULING COATING FILM, BASE MATERIAL PROVIDED WITH ANTIFOULING COATING FILM, METHOD FOR PRODUCING SAME, AND ANTIFOULING METHOD**
ANTIFOULING-BESCHICHTUNGSZUSAMMENTZUNG, ANTIFOULING-BESCHICHTUNGSFILM, MIT ANTIFOULING-BESCHICHTUNGSFILM VERSEHENES BASISMATERIAL, VERFAHREN ZUR HERSTELLUNG DAVON UND ANTIFOULING-VERFAHREN
COMPOSITION DE REVÊTEMENT ANTISALISSURE, FILM DE REVÊTEMENT ANTISALISSURE, MATÉRIAU DE BASE PRÉVU AVEC LE FILM DE REVÊTEMENT ANTISALISSURE, PROCÉDÉ POUR LE PRODUIRE, ET PROCÉDÉ ANTISALISSURE

(30) Priority: 01.07.2016 JP 2016131987
(43) Date of publication of application: 08.05.2019
(73) Proprietor: Chugoku Marine Paints, Ltd., Hiroshima 739-0652 (JP)
(72) Inventor: TANINO, Soichiro, Otake-shi Hiroshima 739-0652 (JP); HAYASHI, Yusuke, Otake-shi Hiroshima 739-0652 (JP)
(74) Representative: Hoffmann Eitle
(86) International application number: PCT/JP2016/083820
(87) International publication number: WO 2018/003136

(56) References cited:
- EP-A1- 2 551 309
- WO-A1-2011/118526
- WO-A1-2013/073580
- WO-A1-2014/175246
- JP-A- 2001 072 869
- JP-A- 2001 323 208
- JP-A- 2011 026 357
- JP-A- 2016 501 951

## Description

### TECHNICAL FIELD

The present invention relates to an antifouling coating composition; and an antifouling coating film, a substrate with an antifouling coating film and a method for producing the substrate, and an antifouling method, each using the composition.

### BACKGROUND ART

As a method for preventing fouling of ships and the like by aquatic organisms, a method using an antifouling coating film containing a combination of a hydrolyzable polymer having coating film renewability from the surface thereof with the lapse of time in water, and an antifouling agent having bioactivity is being currently used widely.

The hydrolyzable polymer used has a metal ester group of zinc or the like, and thereby provides an antifouling coating film having excellent capabilities in both the coating film renewability and the coating film property in water.

As the antifouling agent having bioactivity, plural kinds of compounds are generally used in combination for coping with various species of organisms living in water, particularly in seawater. As the representative antifouling agent, inorganic antifouling agents, such as cuprous oxide, and various organic antifouling agent, such as a pyrithione salt, have been known, and in recent years, (±)-4-[1-(2,3-dimethylphenyl)ethyl]-1H-imidazole, which is referred to as medetomidine, has been found as an antifouling agent having high resistance to adhesion of barnacles.

For example, PTL 1 describes an antifouling coating composition containing a combination of a metal ester group-containing hydrolyzable polymer and medetomidine, exhibiting an excellent antifouling performance even for ships, underwater structures, and the like in ocean areas and navigation conditions with high fouling loads.

### CITATION LIST

### PATENT LITERATURE

PTL 1: WO 2011/118526

### SUMMARY OF INVENTION

### TECHNICAL PROBLEM

However, it has been found that the antifouling coating composition described in the literature has an inexpedience that the formed antifouling coating film that is exposed to a high-speed water flow for a prolonged period of time has a tendency of decrease of the antifouling performance, which is considered to be caused mainly by elution of the organic antifouling agent, and there is a demand for solving the inexpedience.

An object of the present invention is to provide an antifouling coating composition capable of forming an antifouling coating film that continuously has a high antifouling performance against aquatic organisms, such as barnacles and slimes, even in the case where the antifouling coating film is exposed to a high-speed water flow for a prolonged period of time. Another object of the present invention is to provide an antifouling coating film formed with the antifouling coating composition, a substrate with an antifouling coating film and a method for producing the same, and an antifouling method using the antifouling coating film.

### SOLUTION TO PROBLEM

As a result of the earnest investigations made by the present inventors, it has been found that the use of the antifouling coating composition shown below can solve the problem, and thus the present invention has been completed.

The gist of the present invention is as follows.

The present invention relates to the following items [1] to [15].
[1] An antifouling coating composition containing: a hydrolyzable polymer (A) containing a metal ester group, cuprous oxide (B), a copper pyrithione (C), and medetomidine (D), wherein the content of the hydrolyzable polymer (A) in the solid content of the antifouling coating composition is from 8 to 20% by mass, the content of the cuprous oxide (B) in the solid content of the antifouling coating composition is from 35 to 65% by mass, the content of the copper pyrithione (C) in the solid content of the antifouling coating composition is from 0.5 to 7% by mass, the content of the medetomidine (D) in the solid content of the antifouling coating composition is from 0.02 to 2% by mass, and the hydrolyzable polymer (A) contains at least one selected from the group consisting of a polymer (A1') having a constituent unit derived from a polymerizable compound represented by the following formula (1-1') and a polymer (A2') having a constituent unit derived from a polymerizable compound represented by the following formula (1-2'). 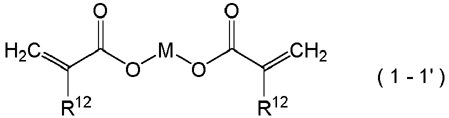 In the formula (1-1'), R¹² each independently represent a hydrogen atom or a methyl group; and M represents copper or zinc, and preferably zinc. 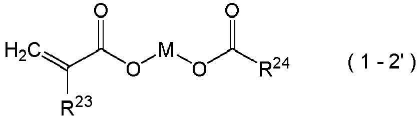 In the formula (1-2'), R²³ represents a hydrogen atom or a methyl group; R²⁴ represents a monovalent organic group having 1 to 30 carbon atoms containing no terminal ethylenically unsaturated group, preferably an organic acid residual group formed from a monobasic acid, more preferably a group resulting from removal of a carboxy group from an organic acid selected from the group consisting of versatic acid, palmitic acid, stearic acid, isostearic acid, oleic acid, linoleic acid, linolenic acid, abietic acid, neoabietic acid, pimaric acid, dehydroabietic acid, 12-hydroxystearic acid, and naphthenic acid, further preferably a group resulting from removal of a carboxy group from abietic acid, versatic acid, or naphthenic acid, and still further preferably a group resulting from removal of a carboxy group from abietic acid or versatic acid; and M represents copper or zinc, and preferably zinc.
[2] The antifouling coating composition according to the item [1], wherein the hydrolyzable polymer (A) has a total content of the constituent units derived from the polymerizable compound represented by the formula (1-1), the polymerizable compound represented by the formula (1-1'), the polymerizable compound represented by the formula (1-2), and the polymerizable compound represented by the formula (1-2') of from 1 to 60% by mass, preferably from 5 to 40% by mass, and more preferably from 10 to 30% by mass, based on the total constituent units.
[3] The antifouling coating composition according to the item [1] or [2], which has a content of the hydrolyzable polymer (A) in a solid content of the antifouling coating composition of from 10 to 20% by mass.
[4] The antifouling coating composition according to any one of the items [1] to [3], which has a content of the medetomidine (D) in a solid content of the antifouling coating composition of from 0.1 to 2% by mass.
[5] The antifouling coating composition according to any one of the items [1] to [4], further containing a monocarboxylic acid compound (E) and/or a metal ester thereof.
[6] An antifouling coating film, which is formed with the antifouling coating composition according to any one of the items [1] to [5].
[7] A substrate with an antifouling coating film, the substrate being coated with the antifouling coating film according to the item [6].
[8] A method for producing a substrate with an antifouling coating film, including: (I) a step of providing an applied material or an impregnated material by applying the antifouling coating composition according to any one of the items [1] to [5] on a substrate or impregnating a substrate with the antifouling coating composition according to any one of the items [1] to [5]; and (II) a step of drying the applied material or the impregnated material.
[9] A method for producing a substrate with an antifouling coating film, including: (i) a step of forming an antifouling coating film by drying the antifouling coating composition according to any one of the items [1] to [5]; and (ii) a step of attaching the coating film to a substrate.
[10] An antifouling method using the antifouling coating film according to the item [6] comprising coating the surface of a substrate with the antifouling coating film.

### ADVANTAGEOUS EFFECTS OF INVENTION

According to the present invention, an antifouling coating composition capable of forming an antifouling coating film that continuously has a high antifouling performance against aquatic organisms, such as barnacles and slimes, even in the case where the antifouling coating film is exposed to a high-speed water flow for a prolonged period of time can be provided. According to the present invention, furthermore, an antifouling coating film formed with the antifouling coating composition, a substrate with an antifouling coating film and a method for producing the same, and an antifouling method using the antifouling coating film can be provided.

### DESCRIPTION OF EMBODIMENTS

The antifouling coating composition, the antifouling coating film, the substrate with an antifouling coating film and the method for producing the same, and the antifouling method according to the present invention will be described in detail below.

In the description herein, the "(meth)acrylic acid" and the "(meth)acrylate" mean "acrylic acid or methacrylic acid" and "acrylate or methacrylate" respectively.

### [Antifouling Coating Composition]

The antifouling coating composition (which may be hereinafter referred simply to as a "coating composition") of the present invention contains a hydrolyzable polymer (A) containing a metal ester group, cuprous oxide (B), a copper pyrithione (C), and medetomidine (D).

According to the present invention, an antifouling coating composition capable of forming an antifouling coating film that continuously has a high antifouling performance against aquatic organisms, such as barnacles and slimes, even in the case where the antifouling coating film is exposed to a high-speed water flow for a prolonged period of time can be provided.

The antifouling coating composition described in PTL 1 has a tendency of decrease of the antifouling performance in case where the formed antifouling coating film is exposed to a high-speed water flow for a prolonged period of time, which is considered to be caused mainly by elution of the organic antifouling agent. It has been found that the antifouling coating composition of the present invention contains the hydrolyzable polymer (A) containing a metal ester group, the cuprous oxide (B), the copper pyrithione (C), and the medetomidine (D), and thereby an antifouling coating composition capable of forming an antifouling coating film that continuously has a high antifouling performance against aquatic organisms for a prolonged period of time can be provided.

While the functional mechanism of the aforementioned effects is not necessarily clear, it can be estimated as follows. Specifically, it is estimated that the antifouling coating film is imparted with appropriate water resistance and renewability from the surface thereof in water by containing the hydrolyzable polymer (A) having a metal ester group, and furthermore with the cuprous oxide (B), the copper pyrithione (C), and the medetomidine (D) contained, is capable of retaining these components in the resulting antifouling coating film for a further prolonged period of time through the complex mutual interaction thereof in the coating film, and consequently the coating film continuously has a high antifouling performance against aquatic organisms, such as barnacles and slimes, even in the case where the coating film is exposed to a high-speed water flow for a prolonged period of time.

The components contained in the antifouling coating composition of the present invention will be described in detail below.

### <Hydrolyzable Polymer (A) containing Metal Ester Group>

The antifouling coating composition of the present invention contains the hydrolyzable polymer (A) containing a metal ester group (which may be hereinafter referred simply to as a "hydrolyzable polymer (A)").

The "metal ester group" referred herein means a salt formed with a metal and an organic acid, and is preferably a group formed by bonding a metal and a carboxylic acid. The "polyvalent metal ester group" or the "divalent metal ester group" described later means a group formed by combining a polyvalent metal or a divalent metal and an organic acid.

The metal ester group is preferably a polyvalent metal ester group, and more preferably a divalent metal ester represented by the following formula (1). 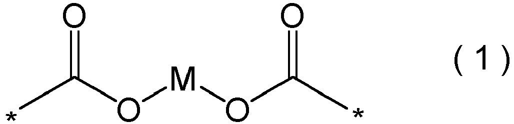 In the formula (1), M represents a divalent metal; and * represents a bonding site.

Examples of the metal constituting the metal ester group include magnesium, calcium, neodymium, titanium, zirconium, iron, ruthenium, cobalt, nickel, copper, zinc, and aluminum.

In the formula (1), M represents a divalent metal, and a divalent metal may be selected from the aforementioned metals and used therefor. Among these, Groups 10 to 12 metals, such as nickel, copper, and zinc, are preferred, copper and zinc are more preferred, and zinc is further preferred.

In the formula (1), * represents a bonding site, which shows bonding to an arbitrary group, preferably an arbitrary organic group.

The hydrolyzable polymer (A) may have the group represented by the formula (1) on the main chain or the end of the side chain thereof, and the main chains thereof may be crosslinked through a divalent group containing the group represented by the formula (1). The hydrolyzable polymer (A) may be an addition polymerization type polymer obtained through polymerization of an ethylenic unsaturated compound, or may be a polycondensation type polymer obtained through polycondensation, such as a polyester and a polyamide, with no particular limitation. Among these, an addition polymerization type polymer obtained through polymerization of an ethylenic unsaturated compound is preferred.

The hydrolyzable polymer (A) preferably contains at least one selected from the group consisting of a polymer (A1) having a constituent unit derived from a polymerizable compound represented by the following formula (1-1) and a polymer (A2) having a constituent unit derived from a polymerizable compound represented by the following formula (1-2). The hydrolyzable polymer (A) may have both a constituent unit derived from a polymerizable compound represented by the following formula (1-1) and a constituent unit derived from a polymerizable compound represented by the following formula (1-2), and this case is designated as the polymer (A1). Consequently, the polymer (A1) is a polymer that contains at least a constituent unit derived from a polymerizable compound represented by the following formula (1-1), and the polymer (A2) is a polymer that contains a constituent unit derived from a polymerizable compound represented by the following formula (1-2), but does not contain a constituent unit derived from a polymerizable compound represented by the following formula (1-1).

In the case where the hydrolyzable polymer (A) is the polymer (A1) having a constituent unit derived from a polymerizable compound represented by the following formula (1-1), the polymerizable compound represented by the following formula (1-1) may be used as a monomer component, or the polymer (A1) may be obtained by providing a polymer having a carboxy group and then metal-esterifying the polymer to form a crosslinked structure, with no particular limitation, and the polymer (A1) is preferably obtained by using the polymerizable compound represented by the following formula (1-1) as a monomer component from the standpoint of the easiness in production.

Similarly, the polymer (A2) having a constituent unit derived from a polymerizable compound represented by the following formula (1-2) may be obtained by using the polymerizable compound represented by the following formula (1-2) as a monomer component, or may be obtained by providing a polymer having a carboxy group and then metal-esterifying the polymer, with no particular limitation, and the polymer (A2) is preferably obtained by using the polymerizable compound represented by the following formula (1-2) as a monomer component from the standpoint of the easiness in production.

In the following description, the polymerizable compound represented by the following formula (1-1) may be referred to as a monomer (a1-1), and the polymerizable compound represented by the following formula (1-2) may be referred to as a monomer (a1-2). The monomer (a1-1) and the monomer (a1-2) may be collectively referred to as a monomer (a1). 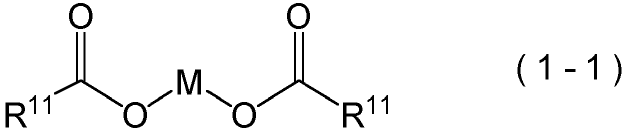 In the formula (1-1), R¹¹ each independently represent a monovalent group containing a terminal ethylenically unsaturated group; and M represents copper or zinc.

In the formula (1-1), R¹¹ each independently represent a monovalent group containing a terminal ethylenically unsaturated group (CH₂=C<), and the number of carbon atoms of R¹¹ is preferably from 2 to 50, more preferably from 2 to 30, further preferably from 2 to 10, and still further preferably from 2 to 6. R¹¹ suffices to have a terminal ethylenically unsaturated group, may have an ethylenically unsaturated group at a position other than the tnerminal, and preferably has an ethylenically unsaturated group only at the terminal.

R¹¹ preferably represents an unsaturated aliphatic group containing a terminal ethylenically unsaturated group, and the unsaturated aliphatic group may have an ester bond, an amide bond, and an ether bond in the carbon chain thereof. Examples of R¹¹ include a group resulting from removal of a carboxy group from an aliphatic unsaturated monocarboxylic acid containing a terminal ethylenically unsaturated group, such as an acrylic acid (2-propenoic acid), methacrylic acid (2-methyl-2-propenoic acid), 3-butenoic acid, 4-pentenoic acid, 10-undecenoic acid, 3-(meth)acryloyloxypropionic acid, and 3-(meth)acryloyloxy-2-methylpropionic acid. Examples thereof also include a group resulting from removal of one carboxy group from an aliphatic unsaturated dicarboxylic acid containing a terminal ethylenically unsaturated group, such as itaconic acid.

Among these, R¹¹ preferably represents a group resulting from removal of a carboxy group from an aliphatic unsaturated monocarboxylic acid containing a terminal ethylenically unsaturated group, more preferably a group resulting from removal of a carboxy group from acrylic acid, methacrylic acid, or (meth)acryloyloxyalkylcarboxylic acid, and further preferably a group resulting from removal of a carboxy group from acrylic acid or methacrylic acid.

Examples of the polymerizable compound represented by the formula (1-1) (i.e., the monomer (a1-1)) include zinc diacrylate, zinc dimethacrylate, zinc acrylate methacrylate, zinc di(3-acryloyloxypropionate), zinc di(3-methacryloyloxypropionate), zinc di(3-(meth)acryloyloxy-2-methylpropionate), copper diacrylate, copper dimethacrylate, copper acrylate methacrylate, copper di(3-acryloyloxypropionate), copper di(3-methacryloyloxypropionate), and copper di(3-(meth)acryloyloxy-2-methylpropionate). 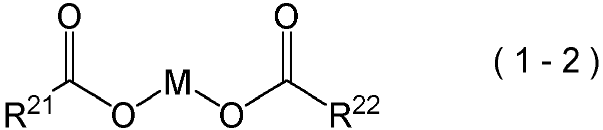 In the formula (1-2), R²¹ represents a monovalent group containing a terminal ethylenically unsaturated group; R²² represents a monovalent organic group having 1 to 30 carbon atoms containing no terminal ethylenically unsaturated group; and M represents copper or zinc.

In the formula (1-2), R²¹ represents a monovalent group containing a terminal ethylenically unsaturated group. Examples of R²¹ include the same groups as for R¹¹ in the formula (1-1), and the preferred embodiments thereof are also the same.

In the formula (1-2), R²² represents a monovalent organic group having 1 to 30 carbon atoms containing no terminal ethylenically unsaturated group. Examples of R²² include an aliphatic hydrocarbon group having 1 to 30 carbon atoms, an alicyclic hydrocarbon group having 3 to 30 carbon atoms, and an aromatic hydrocarbon group having 6 to 30 carbon atoms that contain no terminal ethylenically unsaturated group. These groups may have a substituent. Examples of the substituent include a hydroxy group.

The aliphatic hydrocarbon group may be any of straight-chain and branched chain, and may be any of a saturated aliphatic hydrocarbon group and an unsaturated aliphatic hydrocarbon group. In the case where R²² represents un unsaturated aliphatic hydrocarbon group, R²² contains no terminal ethylenically unsaturated group. The number of carbon atoms of the aliphatic hydrocarbon group is from 1 to 30, preferably from 1 to 28, more preferably from 1 to 26, and further preferably from 1 to 24. The aliphatic hydrocarbon group may be further substituted by an alicyclic hydrocarbon group and an aromatic hydrocarbon group.

The alicyclic hydrocarbon group may be any of a saturated alicyclic hydrocarbon group and an unsaturated alicyclic hydrocarbon group. The number of carbon atoms of the alicyclic hydrocarbon group is from 3 to 30, preferably from 4 to 20, more preferably from 5 to 16, and further preferably from 6 to 12. The alicyclic hydrocarbon group may be further substituted by an aliphatic hydrocarbon group and an aromatic hydrocarbon group.

The number of carbon atoms of the aromatic hydrocarbon group is from 6 to 30, preferably from 6 to 24, more preferably from 6 to 18, and further preferably from 6 to 10. The aromatic hydrocarbon group may be further substituted by an aliphatic hydrocarbon group and an alicyclic hydrocarbon group.

R²² preferably represents an organic acid residual group formed from a monobasic acid, and examples thereof include a group resulting from removal of a carboxy group from an organic acid selected from the group consisting of versatic acid, palmitic acid, stearic acid, isostearic acid, oleic acid, linoleic acid, linolenic acid, abietic acid, neoabietic acid, pimaric acid, dehydroabietic acid, 12-hydroxystearic acid, and naphthenic acid.

Among these, a group resulting from removal of a carboxy group from abietic acid, versatic acid, or naphthenic acid is preferred, and a group resulting from removal of a carboxy group from abietic acid or versatic acid is more preferred.

The polymer (A2) having a constituent unit derived from the polymerizable compound represented by the formula (1-2) preferably contains a constituent unit obtained through polymerization of only the terminal ethylenically unsaturated group in the polymerizable compound represented by the formula (1-2) (i.e., the monomer (a1-2)). Examples of the monomer (a1-2) include a polymerizable compound selected from the group consisting of zinc 3-(meth)acryloyloxypropionate abietate, zinc 3-(meth)acryloyloxypropionate versatate, zinc (meth)acrylate abietate, zinc (meth)acrylate versatate, zinc (meth)acrylate naphthenate, copper 3-(meth)acryloyloxypropionate abietate, copper 3-(meth)acryloyloxypropionate versatate, copper (meth)acrylate abietate, copper (meth)acrylate versatate, and copper (meth)acrylate naphthenate.

In the formulae (1-1) and (1-2), M represents zinc or copper, and preferably zinc.

The hydrolyzable polymer (A) contains at least one selected from the group consisting of a polymer (A1') having a constituent unit derived from a polymerizable compound represented by the following formula (1-1') and a polymer (A2') having a constituent unit derived from a polymerizable compound represented by the following formula (1-2'). The polymer (A1) is preferably the polymer (A1'), and the polymer (A2) is preferably the polymer (A2'). The hydrolyzable polymer (A) may have both a constituent unit derived from a polymerizable compound represented by the following formula (1-1') and a constituent unit derived from a polymerizable compound represented by the following formula (1-2'). 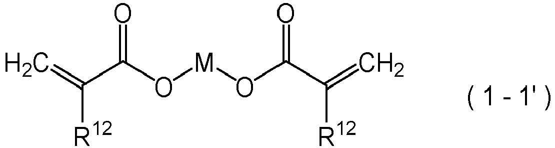 In the formula (1-1'), R¹² each independently represent a hydrogen atom or a methyl group; and M represents copper or zinc.

Examples of the polymerizable compound represented by the formula (1-1') include zinc diacrylate, zinc dimethacrylate, zinc acrylate methacrylate, copper diacrylate, copper dimethacrylate, and copper acrylate methacrylate. 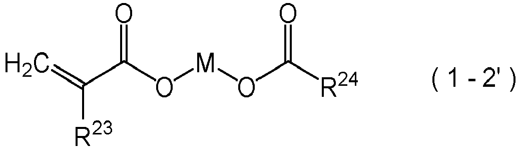 In the formula (1-2'), R²³ represents a hydrogen atom or a methyl group; R²⁴ represents a monovalent organic group having 1 to 30 carbon atoms containing no terminal ethylenically unsaturated group; and M represents copper or zinc.

In the formula (1-2'), examples of R²⁴ include the same groups as for R²² in the formula (1-2), and the preferred embodiments thereof are also the same.

Examples of the polymerizable compound represented by the formula (1-2') include zinc (meth)acrylate abietate, zinc (meth)acrylate versatate, zinc (meth)acrylate naphthenate, copper (meth)acrylate abietate, copper (meth)acrylate versatate, and copper (meth)acrylate naphthenate.

In the formulae (1-1') and (1-2'), M represents zinc or copper, and preferably zinc.

The hydrolyzable polymer (A) preferably has a total content of the constituent units derived from the polymerizable compound represented by the formula (1-1), the polymerizable compound represented by the formula (1-1'), the polymerizable compound represented by the formula (1-2), and the polymerizable compound represented by the formula (1-2'), i.e., a total content of the constituent unit derived from the monomer (a1), of from 1 to 60% by mass, more preferably from 5 to 40% by mass, and further preferably from 10 to 30% by mass, based on the total constituent units.

The proportions of the contents (masses) of the constituent units derived from the monomers in the hydrolyzable polymer (A) can be assumed to be the same as the proportions of the charged amounts (masses) of the monomers used for the polymerization reaction.

The hydrolyzable polymer (A) preferably has a constituent unit derived from the other monomer (a2) than the constituent unit having a metal ester group.

The other monomer (a2) is preferably a monomer having an ethylenic unsaturated group, and examples thereof include:
an alkyl (meth)acrylate or an aryl (meth)acrylate, such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, phenyl (meth)acrylate, and benzyl (meth)acrylate;
an alkoxyalkyl (meth)acrylate, such as 2-methoxyethyl (meth)acrylate, 2-ethoxyethyl (meth)acrylate, 3-methoxybutyl (meth)acrylate, 4-methoxybutyl (meth)acrylate, 3-methoxy-n-propyl (meth)acrylate, 2-propoxyethyl (meth)acrylate, 2-butoxyethyl (meth)acrylate, isobutoxybutyldiglycol (meth)acrylate, 2-phenoxyethyl (meth)acrylate, methoxypolyethylene glycol (meth)acrylate, ethoxypolyethylene glycol (meth)acrylate, butoxypolyethylene glycol (meth)acrylate, and phenoxypolyethylene glycol (meth)acrylate;
a hydroxyalkyl (meth)acrylate, such as hydroxymethyl (meth)acrylate, 2-hydroxyethyl (meth)acrylate, 2-hydroxypropyl (meth)acrylate, 4-hydroxybutyl (meth)acrylate, and 2-hydroxy-3-phenoxypropyl (meth)acrylate;
glycidyl (meth)acrylate;
an organosiloxane group-containing (meth)acrylate; and
a vinyl compound, such as styrene, α-methylstyrene, vinyl acetate, vinyl benzoate, vinyltoluene, acrylonitrile, vinylpyridine, vinylpyrrolidone, and vinyl chloride. These monomers may be used alone or as a combination of two or more kinds thereof.

Among these, an alkyl (meth)acrylate (in which the number of carbon atoms of the alkyl group is preferably from 1 to 20, more preferably from 1 to 12, further preferably from 1 to 6, and still further preferably 1 to 4), an alkoxyalkyl (meth)acrylate (in which the numbers of carbon atoms of the alkyl group in the alkoxy group, and the alkyl group each are preferably from 1 to 20, more preferably from 1 to 12, further preferably from 1 to 6, and still further preferably 1 to 4), and a hydroxyalkyl (meth)acrylate (in which the number of carbon atoms of the alkyl group is preferably from 1 to 20, more preferably from 1 to 12, further preferably from 1 to 6, and still further preferably 1 to 4) are preferred.

As the monomer (a2), at least an alkyl (meth)acrylate is preferably contained, and the content of an alkyl (meth)acrylate in the monomer (a2) is preferably 50% by mass or more, more preferably 70% by mass or more, and further preferably 90% by mass or more.

The hydrolyzable polymer (A) preferably has a content of a constituent unit derived from the monomer (a2) of from 40 to 99% by mass, and more preferably from 70 to 95% by mass, based on the total constituent units.

The hydrolyzable polymer (A) can be produced, for example, in the following procedure.

The monomer (a1) can be synthesized, for example, in a known method, in which a metal compound (which is preferably an inorganic metal compound, specific examples of which include an oxide, a hydroxide, a chloride, and an organic acid salt of copper or zinc (e.g., zinc acetate)) and an organic acid, such as methacrylic acid or acrylic acid, or an ester thereof are heated and stirred in the presence of an organic solvent and water at a temperature equal to or lower than the decomposition temperature of the metal salt.

More specifically, a mixed liquid containing a solvent and a metal component, such as zinc oxide, is stirred under heating to approximately from 50 to 80°C, to which a mixed liquid of an organic acid, such as methacrylic acid or acrylic acid, or an ester thereof, and water and the like is added dropwise, and the mixed liquid is further stirred to prepare the monomer (a1) having a metal ester group.

Subsequently, a solvent is placed in a separately prepared vessel and heated to approximately from 80 to 120°C, to which a mixed liquid of the monomer (a1) having a metal ester group, the other monomer (a2), a polymerization initiator, a chain transfer agent, a solvent, and the like is added dropwise, thereby performing polymerization reaction to provide the hydrolyzable polymer (A) having a metal ester group.

The proportions of the contents (masses) of the constituent units derived from the monomers in the hydrolyzable polymer (A) can be assumed to be the same as the proportions of the charged amounts (masses) of the monomers used for the polymerization reaction.

The polymerization initiator that can be used for the production of the hydrolyzable polymer (A) is not particularly limited, and various radical polymerization initiators can be used. Specific examples thereof include benzoyl peroxide, hydrogen peroxide, cumene hydroperoxide, tert-butyl hydroperoxide, potassium persulfate, sodium persulfate, 2,2'-azobis(isobutyronitrile) (AIBN), 2,2'-azobis(2-methylbutyronitrile) (AMBN), 2,2'-azobis(2,4-dimethylvaleronitrile) (ADVN), and tert-butyl peroctoate (TBPO). The polymerization initiators may be used alone or as a combination of two or more kinds thereof. The radical polymerization initiator may be added into the reaction system only at the start of the reaction, or may be added into the reaction system both at the start of the reaction and in the course of the reaction.

The amount of the polymerization initiator used in the production of the hydrolyzable polymer (A) is preferably from 2 to 20 parts by mass per 100 parts by mass in total of the monomers.

The chain transfer agent that can be used for the production of the hydrolyzable polymer (A) is not particularly limited, and examples thereof include α-methylstyrene dimer, thioglycolic acid, diterpene, terpinolene, γ-terpinene; mercaptans, such as tert-dodecylmercaptan and n-dodecylmercaptan; a halide, such as carbon tetrachloride, methylene chloride, bromoform, and bromotrichloroethane; a secondary alcohol, such as isopropanol; and glycerin. The chain transfer agents may be used alone or as a combination of two or more kinds thereof.

In the case where the chain transfer agent is used in the production of the hydrolyzable polymer (A), the amount thereof used is preferably from 0.1 to 5 parts by mass per 100 parts by mass in total of the monomers.

Examples of the solvent that can be used for the production of the hydrolyzable polymer (A) include an aromatic-based solvent, such as toluene, xylene, and mesitylene; an alcohol, such as propanol, butanol, propylene glycol monomethyl ether, and dipropylene glycol monomethyl ether; a ketone, such as methyl ethyl ketone, methyl isobutyl ketone, and methyl amyl ketone; an ester, such as ethyl acetate and butyl acetate; and water.

In the case where the solvent is used in the production of the hydrolyzable polymer (A), the amount thereof used is not particularly limited, and is preferably from 5 to 150 parts by mass per 100 parts by mass in total of the monomers.

The production method of the hydrolyzable polymer (A) is not limited to the above, and the hydrolyzable polymer (A) may be produced by a method of reacting a polymer (a3) having a carboxy group, a monocarboxylic acid compound (E) described later, and a metal compound (which is preferably an inorganic metal compound, specific examples of which include an oxide, a hydroxide, a chloride, and an organic acid salt of copper or zinc (e.g., zinc acetate)), so as to introduce a metal ester group to the carboxy group of the polymer (a3), or a method of reacting a polymer (a3) having a carboxy group and a metal compound, so as to introduce a metal ester crosslink to the polymer.

Examples of the polymer (a3) having a carboxy group include a polyester-based polymer (a3-1) and an acrylic-based polymer (a3-2), and a polyester-based polymer (a3-1) is preferred.

Examples of the polyester-based polymer (a3-1) include a polyester resin having an acid group.

The polyester-based polymer (a3-1) preferably has an acid value of the solid content of from 50 to 250 mgKOH/g, and more preferably from 80 to 200 mgKOH/g.

The polyester-based polymer (a3-1) can be obtained through reaction of one or more of a polyhydric alcohol and one or more of a polycarboxylic acid and/or an anhydride thereof, arbitrary kinds of which may be used in arbitrary amounts, and the acid value and the viscosity of the polymer can be controlled by the combination thereof.

Preferred examples of the polyester-based polymer (a3-1) include one described in WO 2014/010702 obtained in such a manner that a trihydric or higher hydric alcohol (a3-11), a dibasic acid and/or an anhydride thereof (a3-12), and a dihydric alcohol (a3-13) are reacted, and then an alicyclic dibasic acid and/or an anhydride thereof (a3-14) are further reacted therewith.

The hydrolyzable polymer (A) may also be produced by a method of reacting the polyester-based polymer (a3-1), a monocarboxylic acid (E), and a metal compound, or a method of reacting the polyester polymer (a3-1) and a metal compound, as described above.

The monocarboxylic acid compound (E) to be reacted with the polyester-based polymer (a3-1) may be ones described later, and is preferably a rosin compound, and examples of the metal compound used include a metal oxide, such as zinc oxide and copper oxide, in which zinc oxide is preferably used.

Examples of the acrylic-based polymer (a3-2) include an acrylic polymer (a3-2) containing a carboxy group obtained through radical polymerization of, as a polymerizable compound (monomer), an unsaturated carboxylic acid, such as acrylic acid, methacrylic acid, 3-(meth)acryloyloxypropionic acid, or 3-(meth)acryloyloxy-2-methylpropionic acid, and depending on necessity the other monomer (a2).

As similar to the polyester-based polymer (a3-1), the hydrolyzable polymer (A) may produced by a method of reacting the acrylic-based polymer (a3-2), the monocarboxylic acid (E), and the metal compound (which is preferably an inorganic metal compound, specific examples of which include an oxide, a hydroxide, a chloride, and an organic acid salt of copper or zinc (e.g., zinc acetate)), or a method of reacting the acrylic-based polymer (a3-2) and the metal compound.

The hydrolyzable polymer (A) preferably has a content of copper and/or zinc of from 0.5 to 25% by mass, and more preferably from 1 to 20% by mass, based on the hydrolyzable polymer (A), from the standpoint of the formation of the antifouling coating film excellent in coating film renewability and antifouling performance. The content of copper and/or zinc can be measured with an X-ray diffraction apparatus or an ICP emission analysis apparatus, and can be appropriately controlled by the amounts of the monomers used for the synthesis of the hydrolyzable polymer (A).

The hydrolyzable polymer (A) preferably has an acid value of from 30 to 250 mgKOH/g from the standpoint of the dissolution rate of the resulting antifouling coating film into water within a prescribed range.

The acid value that is 30 mgKOH/g or more is preferred since the hydrolyzable polymer (A) may have a suitable metal content to provide an antifouling coating film excellent in antifouling performance. The acid value that is 250 mgKOH/g or less is preferred since an antifouling coating film excellent in long-term antifouling performance may be obtained.

The number average molecular weight (Mn) and the weight average molecular weight (Mw) of the hydrolyzable polymer (A) are preferably controlled appropriately in consideration of the viscosity and the storage stability of the antifouling coating composition and the elution rate (renewability) of the resulting antifouling coating film.

The number average molecular weight (Mn) of the hydrolyzable polymer (A) is preferably from 500 to 100,000, and more preferably from 700 to 50,000. The weight average molecular weight (Mw) of the hydrolyzable polymer (A) is preferably from 1,000 to 200,000, more preferably from 1,200 to 100,000, and further preferably from 3,000 to 100,000.

The number average molecular weight (Mn) and the weight average molecular weight (Mw) can be obtained by measuring by gel permeation chromatography and converting based on the standard polystyrene.

The hydrolyzable polymer (A) may be used alone as one kind thereof or may be used as a combination of two or more kinds thereof.

The antifouling coating composition preferably has a content of the hydrolyzable polymer (A) in the antifouling coating composition of from 3 to 50% by mass, more preferably from 5 to 20% by mass, and further preferably from 7 to 15% by mass, from the standpoint of the coating workability of the antifouling coating composition or the production of an antifouling coating film excellent in retention of the surface renewability and water resistance. The antifouling coating composition has a content of the hydrolyzable polymer (A) in the solid content of the antifouling coating composition of from 8 to 20% by mass, and preferably from 10 to 20% by mass.

In the present invention, in the case where two or more kinds of the hydrolyzable polymers (A) are contained, the aforementioned contents are preferred ranges for the total content of the hydrolyzable polymers (A), which is also the same as in the components described later.

### <Cuprous Oxide (B)>

The antifouling coating composition of the present invention contains cuprous oxide (B) for the purposes of enhancing the antifouling performance and the water resistance of the formed antifouling coating film in water, preferably seawater, particularly under static condition, and retaining the copper pyrithione and the medetomidine described later in the antifouling coating film even under a water flow for a prolonged period of time through the complex mutual interaction thereof with the hydrolyzable polymer (A) described above.

The cuprous oxide (B) preferably has an average particle diameter of from 1 to 30 µm, and more preferably from 2 to 10 µm, from the standpoint of the enhancement of the antifouling performance and the water resistance of the formed antifouling coating film.

The cuprous oxide (B) is preferably surface-treated with glycerin, stearic acid, lauric acid, sucrose, lecithin, a mineral oil, or the like, from the standpoint of the long-term stability in storage.

The cuprous oxide (B) of this type used may be a commercially available product, and examples thereof include NC-301 (produced by NC Tech Co., Ltd.), NC-803 (produced by NC Tech Co., Ltd.), Red Copp 97N Premium (produced by American Chemet Corporation), Purple Copp 97N (produced by American Chemet Corporation), and LoLoTint 97 (produced by American Chemet Corporation).

The antifouling coating composition preferably has a content of the cuprous oxide (B) in the antifouling coating composition of from 10 to 70% by mass, and more preferably from 25 to 55% by mass, and has a content thereof in the solid content of the antifouling coating composition of from 35 to 65% by mass, from the standpoint of the coating workability of the antifouling coating composition, and the production of an antifouling coating film excellent in retention of the surface renewability and water resistance.

### <Copper Pyrithione (C)>

The antifouling coating composition of the present invention contains a copper pyrithione (C) for the purpose of enhancing the antifouling performance of the formed antifouling coating film particularly against aquatic plant organisms.

The copper pyrithione (C) is represented by the following formula (2): 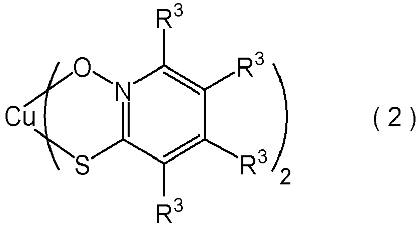 In the formula (2), R³ each independently represent a hydrogen atom, or an alkyl group, a cyclic alkyl group, an alkenyl group, an aryl group, an alkoxy group, or a halogenated alkyl group, each having 1 to 6 carbon atoms.

In the formula (2), R³ preferably represents a hydrogen atom.

The antifouling coating composition preferably has a content of the copper pyrithione (C) in the antifouling coating composition of from 0.1 to 15% by mass, and more preferably from 0.3 to 7% by mass, and has a content thereof in the solid content of the antifouling coating composition of from 0.5 to 7% by mass from the standpoint of the coating workability of the antifouling coating composition or the production of an antifouling coating film excellent in antifouling performance and water resistance.

### <Medetomidine (D)>

The antifouling coating composition of the present invention contains medetomidine (D) for the purpose of imparting a high antifouling performance particularly against barnacles to the formed antifouling coating film.

Medetomidine is (+/-)-4-[1-(2,3-dimethylphenyl)ethyl]-1H-imidazole, and is represented by the following formula (3).

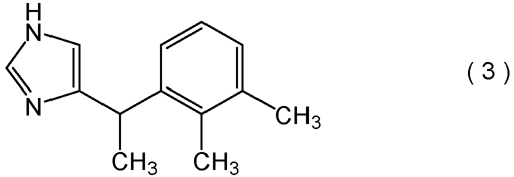

Medetomidine has optical isomerism, and only one isomer thereof or a mixture of isomers at an arbitrary ratio may be used.

As a part or the whole of the medetomidine, an adduct thereof to an imidazolium salt, a metal, or the like may be mixed, or an adduct thereof to an imidazolium salt, a metal, or the like may be formed in the antifouling coating composition or the antifouling coating film.

The antifouling coating composition preferably has a content of the medetomidine (D) in the antifouling coating composition of from 0.01 to 10% by mass, and more preferably from 0.05 to 1% by mass, and has a content thereof in the solid content of the antifouling coating composition of from 0.02 to 2% by mass, and preferably from 0.1 to 2% by mass, from the standpoint of imparting a good antifouling performance to the formed antifouling coating film.

### <Optional Components>

The antifouling coating composition of the present invention may contain, depending on necessity in addition to the aforementioned components, a monocarboxylic acid compound (E) and/or a metal ester thereof, the other antifouling agent (F), the other binder component (G), a pigment (H), an organic solvent (I), an anti-sagging agent/anti-settling agent (J), a dehydrating agent (K), a plasticizer (L), and the like.

### [Monocarboxylic Acid Compound (E) and/or Metal Ester Thereof]

The antifouling coating composition of the present invention preferably further contains a monocarboxylic acid compound (E) and/or a metal ester thereof.

In the present invention, the monocarboxylic acid compound (E) and/or a metal ester thereof enhances the renewability of the formed antifouling coating film from the surface thereof in water, whereby in the case where the antifouling coating film contains an antifouling agent, the discharge thereof to water is accelerated to facilitate the enhancement of the antifouling performance, and furthermore appropriate water resistance is imparted to the antifouling coating film.

As the monocarboxylic acid compound (E), assuming that the monocarboxylic acid compound is represented by R-COOH, for example, R preferably represents a saturated or unsaturated aliphatic hydrocarbon group having 10 to 40 carbon atoms, a saturated or unsaturated alicyclic hydrocarbon group having 3 to 40 carbon atoms, or a group obtained by allowing these groups to have a substituent.

Specifically, preferred examples thereof include abietic acid, neoabietic acid, dehydroabietic acid, palustric acid, isopimaric acid, pimaric acid, trimethylisobutenylcyclohexenecarboxylic acid, versatic acid, stearic acid, and naphthenic acid.

A rosin compound containing abietic acid, palustric acid, isopimaric acid, and the like as a major component is also preferred. Examples of the rosin compound include rosin, such as gum rosin, wood rosin, and tall oil rosin, a rosin derivative, such as hydrogenated rosin, disproportionated rosin, and a rosin metal salt, and pine tar.

Examples of the trimethylisobutenylcyclohexenecarboxylic acid include a reaction product of 2,6-dimethylocta-2,4,6-triene and methacrylic acid, which contains 1,2,3-trimethyl-5-(2-methylprop-1-en-1-yl)cyclohexa-3-ene-1-carboxylic acid and 1,4,5-trimethyl-2-(2-methylprop-1-en-1-yl)cyclohexa-3-ene-1-carboxylic acid as a major component (85% by mass or more).

Examples of the metal ester of the monocarboxylic acid compound (E) include a zinc ester and a copper ester, which may be formed in advance before the production of the antifouling coating composition or may be formed through reaction with the other coating component in the production of the antifouling coating composition.

The monocarboxylic acid compound (E) and/or a metal ester thereof may be used alone or as a combination of two or more kinds thereof.

In the case where the antifouling coating composition of the present invention contains the monocarboxylic acid compound (E) and/or a metal ester thereof, the amount thereof in the solid content of the coating composition is preferably from 0.1 to 50% by mass, and more preferably from 1 to 20% by mass.

### [Other Antifouling Agent (F)]

The antifouling coating composition of the present invention may contain the other antifouling agent (F) than the cuprous oxide (B), the copper pyrithione (C), and the medetomidine (D), for further imparting an antifouling performance to the formed antifouling coating film.

Examples of the other antifouling agent (F) include 4,5-dichloro-2-n-octyl-4-isothiazolin-3-one (abbreviation: DCOIT), copper thiocyanate (copper rhodanide), copper (metallic copper), 4-bromo-2-(4-chlorophenyl)-5-(trifluoromethyl)-1H-pyrrole-3-carbonitrile (abbreviation: tralopyril), a borane-nitride-based base adduct (such as pyridine triphenylborane and 4-isopropylpyridine diphenylmethyl borane), N,N-dimethyl-N'-(3,4-dichlorophenyl)urea, N-(2,4,6-trichlorophenyl)maleimide, 2-methylthio-4-tert-butylamino-6-cyclopropylamino-1,3,5-triazine, 2,4,5,6-tetrachloroisophthalonitrile, bisdimethyldithiocarbamoyl zinc ethylenebisdithiocarbamate, chloromethyl-n-octyl disulfide, N,N'-dimethyl- N'-phenyl-(N-fluorodichloromethylthio)sulfamide, tetraalkylthiuram disulfide, zinc dimethyl dithiocarbamate, zinc ethylene bisdithiocarbamate, 2,3-dichloro-N-(2',6'-diethylphenyl)maleimide, and 2,3-dichloro-N-(2'-ethyl-6'-methylphenyl)maleimide, and among these, DCOIT is preferred.

These other antifouling agents (F) may be used alone or as a combination of two or more kinds thereof.

The total content of the other antifouling agent (F) in the solid content of the antifouling coating composition is preferably from 0.1 to 50% by mass, and more preferably from 0.5 to 20% by mass.

### [Other Binder Component (G)]

The antifouling coating composition of the present invention may contain the other binder component (G) than the hydrolyzable polymer (A), for the purpose of imparting water resistance and crack resistance to the formed antifouling coating film.

The other binder component (G) does not have a metal ester group.

Examples of the other binder component (G) include an acrylic-based copolymer (acrylic resin), a vinyl-based copolymer, chlorinated paraffin, n-paraffin, a terpene phenol resin, and a polyvinyl ethyl ether. Among these, an acrylic-based copolymer, a vinyl-based copolymer, and chlorinated paraffin are preferred. The acrylic-based copolymer and the vinyl-based copolymer used may be one obtained through polymerization of the compound described for the other monomer (a2).

The other binder component (G) may be used alone or as a combination of two or more kinds thereof.

The other binder component (G) used may be a commercially available product, and examples thereof include "Dianal BR-106", produced by Mitsubishi Rayon Co., Ltd., for the acrylic-based copolymer (acrylic resin), and "Toyoparax A-40, A-50, A-70, A-145, A-150, and 150", produced by Tosoh Corporation, for the chlorinated paraffin.

In the case where the antifouling coating composition of the present invention contains the other binder component (G), the content thereof in the solid content of the antifouling coating composition is preferably from 0.1 to 10% by mass.

### [Pigment (H)]

The antifouling coating composition of the present invention may contain a pigment (H) for the purpose of coloring of the coating film and hiding the underlying material and for the purpose of controlling the coating film to have appropriate strength.

Examples of the pigment (H) include an extender pigment, such as talc, mica, clay, potassium feldspar, zinc oxide, calcium carbonate, kaolin, alumina white, white carbon, aluminum hydroxide, magnesium carbonate, barium carbonate, barium sulfate, calcium sulfate, and zinc sulfate, bengal red (red iron oxide), titanium white (titanium oxide), yellow iron oxide, carbon black, naphthol red, and phthalocyanine blue, and among these, talc or zinc oxide is preferably contained. The pigments may be used alone or as a combination of two or more kinds thereof.

In the case where the antifouling coating composition of the present invention contains the pigment (H), the preferred content thereof may be determined by the desired viscosity and the like corresponding to the coating mode of the coating composition, and the content thereof in the solid content of the coating composition is preferably from 1 to 50% by mass.

### [Organic Solvent (I)]

The antifouling coating composition of the present invention may contain an organic solvent (I) for the purpose of retaining the viscosity of the coating composition low and enhancing the spraying atomization performance thereof.

The organic solvent (I) used may be an organic solvent of an aromatic hydrocarbon type, an aliphatic hydrocarbon type, an alicyclic hydrocarbon type, a ketone type, an ester type, or an alcohol type, and is preferably an aromatic hydrocarbon-based organic solvent.

Examples of the aromatic hydrocarbon-based organic solvent include toluene, xylene, styrene, and mesitylene.

Examples of the aliphatic hydrocarbon-based organic solvent include pentane, hexane, heptane, and octane.

Examples of the alicyclic hydrocarbon-based organic solvent include cyclohexane, methylcyclohexane, and ethylcyclohexane.

Examples of the ketone-based organic solvent include acetylacetone, acetone, methyl ethyl ketone, methyl isobutyl ketone, and dimethyl carbonate.

Examples of the ester-based organic solvent include propylene glycol monomethyl ether acetate.

Examples of the alcohol-based organic solvent include isopropanol, n-butanol, and propylene glycol monomethyl ether.

The organic solvent (I) may be used alone or as a combination of two or more kinds thereof.

In the case where the antifouling coating composition of the present invention contains the organic solvent (I), the preferred content thereof may be determined by the desired viscosity corresponding to the coating mode of the coating composition, and the like, and the content thereof is preferably from 0 to 50% by mass. In the case where the content thereof is too large, an inexpedience including deterioration of the anti-sagging performance may occur in some cases.

### [Anti-sagging Agent/Anti-settling Agent (J)]

The antifouling coating composition of the present invention may contain an anti-sagging agent/anti-settling agent (J) for the purpose of controlling the viscosity of the coating composition.

Examples of the anti-sagging agent/anti-settling agent (J) include organoclay-based wax (such as stearate salts, a lecithin salt, and an alkyl sulfonate of Al, Ca, and Zn), organic-based wax (such as polyethylene wax, oxidized polyethylene wax, amide wax, polyamide wax, and hydrogenated castor oil wax), a mixture of organoclay-based wax and organic-based wax, and synthetic fine powder silica.

The anti-sagging agent/anti-settling agent (J) used may be a commercially available product, and examples thereof include "Disperlon 305", "Disperlon 4200-20", "Disperlon A630-20X", and "Disperlon 6900-20X" all produced by Kusumoto Chemicals, Ltd., and "A-S-A D-120", produced by Itoh Oil Chemicals, Co., Ltd.

The anti-sagging agent/anti-settling agent (J) may be used alone or as a combination of two or more kinds thereof.

In the case where the antifouling coating composition of the present invention contains the anti-sagging agent/anti-settling agent (J), the content thereof in the solid content of the coating composition is preferably from 0.01 to 10% by mass, and more preferably from 0.1 to 3% by mass.

### [Dehydrating Agent (K)]

The antifouling coating composition of the present invention may contain a dehydrating agent (K) for the purpose of enhancing the storage stability thereof.

Examples of the dehydrating agent (K) include alkoxysilane, zeolite, which has been known as a generic name "molecular sieve", alumina, an ortho ester, such as an alkyl orthoformate, orthoboric acid, and an isocyanate. The dehydrating agent may be used alone or as a combination of two or more kinds thereof.

In the case where the antifouling coating composition of the present invention contains the dehydrating agent (K), the content thereof in the solid content of the coating composition is preferably from 0.1 to 10% by mass, and more preferably from 0.2 to 2% by mass. In the case where the content of the dehydrating agent (K) is in the range, the storage stability of the coating composition can be kept good.

### [Plasticizer (L)]

The antifouling coating composition of the present invention may contain a plasticizer (L) for the purpose of imparting plasticity to the antifouling coating film.

Examples of the plasticizer (L) include tricresyl phosphate (TCP), dioctyl phthalate (DOP), and diisodecyl phthalate (DIDP). The plasticizer may be used alone or as a combination of two or more kinds thereof.

In the case where the antifouling coating composition of the present invention contains the plasticizer (L), the content thereof in the solid content of the coating composition is preferably from 0.1 to 10% by mass, and more preferably from 0.5 to 5% by mass. In the case where the content of the plasticizer (L) is in the range, the plasticity of the antifouling coating film can be kept good.

### [Production Method of Antifouling Coating Composition]

The antifouling coating composition of the present invention can be prepared by the same equipment, procedures, and the like as for the known ordinary antifouling paint. Specifically, the antifouling coating composition may be produced by preparing the hydrolyzable polymer (A), and then adding the other additives depending on necessity to the solution of the polymer at one time or sequentially, and stirring and mixing the resultant.

### [Antifouling Coating Film and Substrate with Antifouling Coating Film, Method for Producing Same, and Antifouling Method]

The antifouling coating film of the present invention is formed with the antifouling coating composition of the present invention, and can be obtained by drying the antifouling coating composition.

Specifically, the antifouling coating film can be obtained, for example, by applying the antifouling coating composition of the present invention on a coating film in existence or a substrate, and then drying (curing) the coating composition.

Examples of the method for applying the antifouling coating composition of the present invention include known methods using a brush, a roller, a spray, and the like.

The antifouling coating composition applied in the aforementioned method may be dried, for example, by allowing to stand under a condition of 25°C for a period of approximately from 0.5 to 14 days, and preferably approximately from 0.5 to 10 days, so as to provide a coating film. The coating composition may be dried while blowing the air under heating.

The thickness of the antifouling coating film after drying may be arbitrarily selected corresponding to the self-polishing rate and the period of use of the antifouling coating film, and is preferably, for example, approximately from 30 to 1,000 µm. Examples of the method for producing the antifouling coating film having the thickness include a method of applying the coating composition once or plural times to a thickness per one time applying of preferably from 10 to 300 µm, and more preferably from 30 to 200 µm.

The substrate with an antifouling coating film according to the present invention is one coated with an antifouling coating film formed with the antifouling coating composition, and has the antifouling coating film on a substrate.

The method for producing the substrate with an antifouling coating film according to the present invention is not particularly limited, and the substrate with an antifouling coating film can be obtained, for example, by a production method including: (I) a step of providing an applied material or an impregnated material by applying the antifouling coating composition of the present invention on a substrate or impregnating a substrate with the antifouling coating composition of the present invention; and (II) a step of drying the applied material or the impregnated material.

In the step (I), the method for applying the coating composition on the substrate may be the aforementioned coating method. The method for impregnating is not particularly limited, and may be performed by immersing the substrate in the coating composition in an amount that is sufficient for the impregnation. The method for drying the applied material or the impregnated material is not particularly limited, and the material may be dried in the similar manner as in the production of the antifouling coating film.

The substrate with an antifouling coating film of the present invention can also be obtained by a method including: (i) a step of forming a coating film by drying the antifouling coating composition of the present invention; and (ii) a step of attaching the coating film to a substrate.

In the step (i), the method for forming the coating film is not particularly limited, and the coating film can be produced in the similar method as in the production of the antifouling coating film.

In the step (ii), the method for attaching the coating film to a substrate is not particularly limited, and the coating film can be attached, for example, by the method described in JP 2013-129724 A.

The antifouling method of the present invention uses an antifouling coating film formed with the antifouling coating composition of the present invention, and the fouling, specifically adhesion of aquatic organisms and the like, is prevented by coating the surface of the substrate with the antifouling coating film.

The antifouling coating composition of the present invention can be utilized for retaining the antifouling performance of the substrate for a prolonged period of time in a wide range of industrial fields including ships, fishery, marine structures, and the like. Examples of the substrate include a ship (such as an outside shell of a ship's hull of a large scale steel-hulled ship, e.g., a container ship and a tanker, a fishing boat, an FRP boat, a wooded boat, a yacht, and the like, and a newly built ship and a repaired ship), a fishing material (such as a rope, a fishing net, a fishing gear, a float, and a buoy), and an marine structure, such as a mega-float. Among these, the substrate is preferably selected from the group consisting of a ship, an underwater structure, and a fishing gear, is more preferably selected from the group consisting of a ship and an underwater structure, and is further preferably a ship.

The substrate, on which the antifouling coating composition of the present invention is to be formed on the surface thereof, may have a surface having been treated with other treating agents, such as a rust inhibitor, a surface having been coated with a certain coating film, such as a primer, or a surface having been coated with the antifouling coating composition of the present invention.

### Examples

The present invention will be described more specifically with reference to examples below, but the present invention is not limited to the examples.

The "solid contents" of the components used in the examples each mean a component obtained from removal of the volatile component contained as a solvent from the component, and mean a component that is obtained by drying the component in a hot air dryer at 108°C for 3 hours.

### [Production of Hydrolyzable Polymer (A)]

For producing the hydrolyzable polymer (A), hydrolyzable group-containing monomers (a1-1) and (a1-2) were prepared in the following manner.

### <Preparation Example 1: Preparation of Hydrolyzable Group-containing Monomer (Metal Ester Group-containing Monomer) (a1-1)>

85.4 parts by mass of propylene glycol monomethyl ether and 40.7 parts by mass of zinc oxide were charged in a reaction vessel equipped with a stirrer, a condenser, a thermometer, a dropping device, a nitrogen introducing tube, and a heating and cooling jacket, and heated to 75°C under stirring. Subsequently, a mixture of 43.1 parts by mass of methacrylic acid, 36.1 parts by mass of acrylic acid, and 5.0 parts by mass of water was added dropwise thereto from the dropping device at a constant dropping rate over 3 hours. After completing the dropwise addition, the mixture was further stirred for 2 hours, and then 36.0 parts by mass of propylene glycol monomethyl ether was added thereto, so as to provide a reaction liquid containing the hydrolyzable group-containing monomer (metal ester group-containing monomer) (a1-1).

### <Preparation Example 2: Preparation of Hydrolyzable Group-containing Monomer (Metal Ester Group-containing Monomer) (a1-2)>

72.4 parts by mass of propylene glycol monomethyl ether and 40.7 parts by mass of zinc oxide were charged in a reaction vessel equipped with a stirrer, a condenser, a thermometer, a dropping device, a nitrogen introducing tube, and a heating and cooling jacket, and heated to 75°C under stirring. Subsequently, a mixture of 30.1 parts by mass of methacrylic acid, 25.2 parts by mass of acrylic acid, and 51.6 parts by mass of versatic acid was added dropwise thereto from the dropping device at a constant dropping rate over 3 hours. After completing the dropwise addition, the mixture was further stirred for 2 hours, and then 11.0 parts by mass of propylene glycol monomethyl ether was added thereto, so as to provide a reaction liquid containing the hydrolyzable group-containing monomer (metal ester group-containing monomer) (a1-2).

### <Production Example 1: Production of Hydrolyzable Polymer (Metal Ester Group-containing Copolymer) Solution (A-1)>

15.0 parts by mass of propylene glycol monomethyl ether, 57.0 parts by mass of xylene, and 4.0 parts by mass of ethyl acrylate were charged in a reaction vessel equipped with a stirrer, a condenser, a thermometer, a dropping device, a nitrogen introducing tube, and a heating and cooling jacket, and heated to 100±5°C under stirring. At the same temperature retained, 52.0 parts by mass of the reaction liquid containing the hydrolyzable group-containing monomer (a1-1) obtained in the Preparation Example 1, 1.0 part by mass of methyl methacrylate, 66.2 parts by mass of ethyl acrylate, 5.4 parts by mass of 2-methoxyethyl acrylate, 2.5 parts by mass of 2,2'-azobisisobutyronitrile as a polymerization initiator, 7.0 parts by mass of 2,2'-azobis(2-methylbutyronitrile) as a polymerization initiator, 1.0 part by mass of "Nofmer MSD", produced by NOF Corporation, as a chain transfer agent, and 10.0 parts by mass of xylene were added dropwise to the reaction vessel from the dropping device over 6 hours. After completing the dropwise addition, 0.5 part by mass of tert-butyl peroctoate (TBPO) as a polymerization initiator and 7.0 parts by mass of xylene were added dropwise thereto over 30 minutes, and after further stirring for 1 hour and 30 minutes, 4.4 parts by mass of xylene was added thereto, so as to prepare a pale yellowish transparent hydrolyzable polymer solution (A-1) containing a hydrolyzable polymer (metal ester group-containing copolymer).

The formulation of the monomers used and the characteristic values of the hydrolyzable polymer solution (A-1) and the resulting hydrolyzable polymer are shown in Table 1. In the table, the theoretical mixing amounts (part by mass) of the monomers are shown.

### <Production Example 2: Production of Hydrolyzable Polymer (Metal Ester Group-containing Copolymer) Solution (A-2)>

15.0 parts by mass of propylene glycol monomethyl ether, 57.0 parts by mass of xylene, and 4.0 parts by mass of ethyl acrylate were charged in a reaction vessel equipped with a stirrer, a condenser, a thermometer, a dropping device, a nitrogen introducing tube, and a heating and cooling jacket, and heated to 100±5°C under stirring. At the same temperature retained, 47.5 parts by mass of the reaction liquid containing the hydrolyzable group-containing monomer (a1-1) obtained in the Preparation Example 1, 14.6 parts by mass of methyl methacrylate, 52.6 parts by mass of ethyl acrylate, 7.5 parts by mass of n-butyl acrylate, 2.5 parts by mass of 2,2'-azobisisobutyronitrile as a polymerization initiator, 8.5 parts by mass of 2,2'-azobis(2-methylbutyronitrile) as a polymerization initiator, 1.0 part by mass of "Nofmer MSD", produced by NOF Corporation, as a chain transfer agent, and 10.0 parts by mass of xylene were added dropwise to the reaction vessel from the dropping device over 6 hours. After completing the dropwise addition, 0.5 part by mass of tert-butyl peroctoate as a polymerization initiator and 7.0 parts by mass of xylene were added dropwise thereto over 30 minutes, and after further stirring for 1 hour and 30 minutes, 6.9 parts by mass of xylene was added thereto, so as to prepare a pale yellowish transparent hydrolyzable polymer solution (A-2) containing a hydrolyzable polymer (metal ester group-containing copolymer).

The formulation of the monomers used and the characteristic values of the hydrolyzable polymer solution (A-2) and the resulting hydrolyzable polymer are shown in Table 1.

### <Production Example 3: Production of Hydrolyzable Polymer (Metal Ester Group-containing Copolymer) Solution (A-3)>

15.0 parts by mass of propylene glycol monomethyl ether, 60.0 parts by mass of xylene, and 4.0 parts by mass of ethyl acrylate were charged in a reaction vessel equipped with a stirrer, a condenser, a thermometer, a dropping device, a nitrogen introducing tube, and a heating and cooling jacket, and heated to 100±5°C under stirring. At the same temperature retained, 40.2 parts by mass of the reaction liquid containing the hydrolyzable group-containing monomer (a1-1) obtained in the Preparation Example 1, 15.0 parts by mass of methyl methacrylate, 48.0 parts by mass of ethyl acrylate, 15.0 parts by mass of n-butyl acrylate, 2.5 parts by mass of 2,2'-azobisisobutyronitrile as a polymerization initiator, 6.5 parts by mass of 2,2'-azobis(2-methylbutyronitrile) as a polymerization initiator, 1.2 parts by mass of "Nofmer MSD", produced by NOF Corporation, as a chain transfer agent, and 10.0 parts by mass of xylene were added dropwise to the reaction vessel from the dropping device over 6 hours. After completing the dropwise addition, 0.5 part by mass of tert-butyl peroctoate as a polymerization initiator and 7.0 parts by mass of xylene were added dropwise thereto over 30 minutes, and after further stirring for 1 hour and 30 minutes, 8.0 parts by mass of xylene was added thereto, so as to prepare a pale yellowish transparent hydrolyzable polymer solution (A-3) containing a hydrolyzable polymer (metal ester group-containing copolymer).

The formulation of the monomers used and the characteristic values of the hydrolyzable polymer solution (A-3) and the resulting hydrolyzable polymer are shown in Table 1.

### <Production Example 4: Production of Hydrolyzable Polymer (Metal Ester Group-containing Copolymer) Solution (A-4)>

10.0 parts by mass of propylene glycol monomethyl ether, 63.0 parts by mass of xylene, and 3.0 parts by mass of ethyl acrylate were charged in a reaction vessel equipped with a stirrer, a condenser, a thermometer, a dropping device, a nitrogen introducing tube, and a heating and cooling jacket, and heated to 100±5°C under stirring. At the same temperature retained, 50.3 parts by mass of the reaction liquid containing the hydrolyzable group-containing monomer (a1-2) obtained in the Preparation Example 2, 9.0 parts by mass of methyl methacrylate, 58.0 parts by mass of ethyl acrylate, 5.0 parts by mass of 2,2'-azobis(2-methylbutyronitrile) as a polymerization initiator, and 10.0 parts by mass of propylene glycol monomethyl ether were added dropwise to the reaction vessel from the dropping device over 4 hours. After completing the dropwise addition, 0.5 part by mass of tert-butyl peroctoate as a polymerization initiator and 7.0 parts by mass of xylene were added dropwise thereto over 30 minutes, and after further stirring for 1 hour and 30 minutes, 12.0 parts by mass of xylene was added thereto, so as to prepare a pale yellowish transparent hydrolyzable polymer solution (A-4) containing a hydrolyzable polymer (metal ester group-containing copolymer).

The formulation of the monomers used and the characteristic values of the hydrolyzable polymer solution (A-4) and the resulting hydrolyzable polymer are shown in Table 1.

**Table 1**

| Production Example | | | Production Example 1 | Production Example 2 | Production Example 3 | Production Example 4 |
|---|---|---|---|---|---|---|
| Hydrolyzable polymer solution | | | (A-1) | (A-2) | (A-3) | (A-4) |
| Monomer | Reaction liquid containing metal ester group-containing monomer (a1-1) (monomer (part by mass) in parentheses) | | 52.0 (23.4) | 47.5 (21.4) | 40.2 (18.1) | |
| | Reaction liquid containing metal ester group-containing monomer (a1-2) (monomer (part by mass) in parentheses) | | | | | 50.3 (30.2) |
| | Other monomer (a2) | Methyl methacrylate | 1.0 | 14.6 | 15.0 | 9.0 |
| | | Ethyl acrylate | 70.2 | 56.6 | 52.0 | 61.0 |
| | | Butyl acrylate | | 7.5 | 15.0 | |
| | | 2-Methoxyethyl acrylate | 5.4 | | | |
| Characteristics | Solid content (% by mass) | | 46.5 | 46.4 | 46.4 | 45.0 |
| | Viscosity (mPa·s/25°C) | | 403 | 867 | 397 | 754 |
| | Zinc content in hydrolyzable polymer solution (% by mass) (Zinc content in hydrolyzable polymer (% by mass) in parentheses) | | 2.9 (6.2) | 2.8 (6.0) | 2.5 (5.4) | 3.3 (7.3) |
| | Number average molecular weight (Mn) | | 820 | 840 | 900 | 1,100 |
| | Weight average molecular weight (Mw) | | 4,800 | 4,800 | 5,200 | 5,900 |

### <Production Example 5: Production of Hydrolyzable Polymer (Metal Ester Group-containing Copolymer) Solution (A-5)>

50.0 parts by mass of n-butanol and 50.0 parts by mass of xylene were charged in a reaction vessel equipped with a stirrer, a condenser, a thermometer, a dropping device, a nitrogen introducing tube, and a heating and cooling jacket, and heated to 115±5°C under stirring. At the same temperature retained, a mixed liquid containing 58.3 parts by mass of ethyl acrylate, 25.0 parts by mass of cyclohexyl acrylate, 16.7 parts by mass of acrylic acid, and 3.0 parts by mass of tert-butyl peroxy-2-ethylhexanoate was added dropwise to the reaction vessel from the dropping device at a constant dropping rate over 3 hours, and further stirred for 2 hours, so as to prepare a varnish containing carboxylic acid group-containing copolymer (A-5-1).

93.5 parts by mass of the varnish (A-5-1), 33.4 parts by mass of WW rosin, 21.95 parts by mass of zinc acetate, and 50 parts by mass of xylene were charged in a reaction vessel equipped with a stirrer, a decanter, a condenser, a thermometer, a nitrogen introducing tube, and a heating and cooling jacket, and heated to the refluxing temperature, and the reaction was continued for 14 hours while removing the outflowing mixed solution of acetic acid, water, and the solvent, and replenishing the same amount of xylene. The end point of the reaction was determined by quantitatively determining acetic acid in the outflowing solvent. After cooling, n-butanol and xylene were added thereto, so as to provide a hydrolyzable polymer solution (A-5) containing a hydrolyzable polymer, having a solid content of 51.4%, a viscosity at 25°C of 182 mPa-s, and a zinc content in the hydrolyzable polymer solution of 4.0% by mass (a zinc content in the hydrolyzable polymer of 7.8% by mass). The hydrolyzable polymer in the hydrolyzable polymer solution (A-5) had a number average molecular weight (Mn) of 960 and a weight average molecular weight (Mw) of 4,700.

The measurement method for the viscosity and the zinc content of the polymer solution, and the number average molecular weight (Mn) and the weight average molecular weight (Mw) of the polymer for the resulting hydrolyzable polymer solutions (A-1) to (A-5) was as follows.

### <Viscosity of Hydrolyzable Polymer Solution>

The viscosity of the hydrolyzable polymer solution at 25°C was measured with an E-type viscometer (produced by Toki Sangyo Co., Ltd.).

### <Zinc Content of Hydrolyzable Polymer Solution>

The zinc content of the hydrolyzable polymer solution was measured with an X-ray diffractometer (Horizontal sample mount multi-purpose X-ray diffractometer Ultima IV, produced by Rigaku Corporation).

The zinc content of the hydrolyzable polymer was calculated from the measured zinc content of the hydrolyzable polymer solution and the measured solid content of the hydrolyzable polymer solution, and shown in Table 1. For Production Example 5, the zinc content of the hydrolyzable polymer was calculated and shown in the production example.

### <Number Average Molecular Weight (Mn) and Weight Average Molecular Weight (Mw) of Hydrolyzable Polymer>

The number average molecular weight (Mn) and the weight average molecular weight (Mw) of the hydrolyzable polymer were measured by GPC (gel permeation chromatography) under the following condition.

### GPC Condition

Equipment: "HLC-8320GPC" (produced by Tosoh Corporation)
Columns: "TSKgel Super AWM-H" × 2 and "TSKgel Super AW2500" × 1 connected (all produced by Tosoh Corporation, inner diameter: 6 mm, length: 15 cm)
Eluent: N,N-dimethylformamide (DMF) (20 mM lithium bromide added)
Flow rate: 0.600 mL/min
Detector: RI
Column thermostat chamber temperature: 40°C
Standard substance: polystyrene
Preparation method of specimen: The polymer solutions prepared in Production Examples each were dehydrated by adding a small amount of calcium chloride, and then filtered with a membrane filter to provide a filtrate, which was designated as a specimen for the GPC measurement.

### [Examples 1 to 15 and Comparative Examples 1 to 3: Production of Antifouling Coating Composition and Antifouling Coating Film]

### <Mixed Component>

The mixed components used in the antifouling coating compositions are shown in Table 2.

**Table 2**

| | | Name of component | Chemical formula, characteristics, manufacturer, etc. |
|---|---|---|---|
| (B) | Cuprous oxide | cuprous oxide 1 | "Cuprous oxide NC-301", produced by NC Tech Co., Ltd. average particle diameter: 2.5 µm |
| | | cuprous oxide 2 | "Cuprous oxide NC-803", produced by NC Tech Co., Ltd. average particle diameter: 8 µm |
| | | cuprous oxide 3 | "Purple Copp 97N", produced by American Chemet Corp. average particle diameter: 15 µm |
| (C) | Pyrithione salt | copper pyrithione | "Copper Omadine Powder", produced by Arch UK Biocides, Ltd. chemical formula: Cu(-S-C₅H₄N-O-)₂ |
| | | zinc pyrithione | "Zinc Omadine Powder", produced by Arch UK Biocides, Ltd. chemical formula: Zn(-S-C₅H₄N-O-)₂ |
| (D) | Medetomidine | medetomidine | "Selektope", produced by I-tech AB |
| (E) | Monocarboxylic acid compound | rosin | WW rosin (made in China) |
| | | versatic acid | "Versatic 10", produced by Japan Epoxy Resin Co., Ltd. Neodecanoic acid |
| (F) | Other antifouling agent | DCOIT | "SEA NINE 211N", produced by Rohm and Haas Japan K.K. xylene solution, solid content: 30% by mass |
| (G) | Other binder component | chlorinated paraffin | "Toyoparax 150", produced by Tohoku Tosoh Chemical Co., Ltd. |
| | | acrylic resin (containing no metal ester) | "Dianal BR-106", produced by Mitsubishi Rayon Co., Ltd. |
| (H) | Pigment | red iron oxide | "Bengara No. 404", produced by Morishita Bengara Kogyo Co., Ltd. |
| | | zinc oxide | "Zinc Oxide Class 3", produced by Hakusuitech Co., Ltd. |
| | | talc | "TTK Talc", produced by Takehara Kagaku Kogyo Co., Ltd. |
| | | calcium sulfate | "AS Gypsum", produced by San Esu Gypsum Co., Ltd. |
| (I) | Organic solvent | xylene | - |
| | | propylene glycol monomethyl ether | |
| (J) | Anti-sagging agent/ anti-settling agent | fatty acid amide | "Disperlon 6900-20X", produced by Kusumoto Chemicals, Ltd. (solid content: 20% by mass) |
| | | oxidized polyethylene | "A-S-A D-120", produced by Itoh Oil Chemicals, Co., Ltd. (solid content: 20% by mass) |

### <Production of Antifouling Coating Composition>

The components were mixed by stirring according to the blending amounts (part by mass) shown in Table 3, so as to provide an antifouling coating composition. The blending amounts shown in Table 3 each are shown in terms of the solution or the dispersion liquid for the component with the solid content described, and shown in terms of solid content for the component with no solid content described (except for the organic solvents).

### <Evaluation>

The resulting antifouling coating compositions were subjected to the following evaluation.

### [Evaluation of Antifouling Performance]

### Production of Antifouling Test Panel

An epoxy-based anti-corrosive paint (Epoxy AC Paint, "Bannoh 500", a trade name, produced by Chugoku Marine Paints, Ltd.) was applied on a sand-blasted steel panel to a dry thickness of 150 µm, and then a vinyl-based binder paint ("Silvax SQ-K", a trade name, produced by Chugoku Marine Paints, Ltd.) was applied thereon to a dry thickness of 40 µm. Subsequently, the antifouling coating composition shown in Table 3 was applied once thereon to a dry thickness of 200 µm, and dried for 7 days, so as to provide a test panel having an antifouling coating film (antifouling test panel). The aforementioned three coating operations were performed once per day. Plural sheets of the antifouling test panel were produced for each of the coating compositions for using in the evaluation of antifouling performance described later.

### Antifouling Test (1)

The antifouling test panel produced above was fixed to an inner wall of a cylinder, in which a rotational water flow was formed at a velocity making a surface velocity of 10 knot, and placed under a dynamic immersion environment in seawater at 30°C for 6 months, and then immersed in water in Tokyo Bay at a position of approximately 2 m from the water surface in such a direction that the test surface became perpendicular to the water surface. Under the condition, the coating film is exposed to a water flow at a high temperature, and thus is in a state close to the case where the coating film is acceleratedly exposed to a water flow for a prolonged period of time, and fouling with barnacles tends to occur due to the condition and the immersion marine area. After 6 months and after 12 months from the start of the immersion under the condition, the area where barnacles were attached on the antifouling coating film was measured, and the barnacle resistance test of the antifouling coating film was evaluated according to the following "Evaluation Standard of Antifouling Performance by Barnacles Attached Area". The results are shown in Table 3.

### [Evaluation Standard of Antifouling Performance by Barnacles Attached Area]

5: The area occupied by barnacles in total on the test surface was less than 1% of the total area.
4: The area was 1% or more and less than 10% of the total area.
3: The area was 10% or more and less than 30% of the total area.
2: The area was 30% or more and less than 70% of the total area.
1: The area was 70% or more of the total area.

### Antifouling Test (2)

The antifouling test panel produced above was fixed to an inner wall of a cylinder, in which a rotational water flow was formed at a velocity making a surface velocity of 10 knot, and placed under a dynamic immersion environment in seawater at 30°C for 6 months, and then immersed in water in Hiroshima Bay at a position of approximately 50 cm from the water surface in such a direction that the test surface became in parallel to the water surface to be directed to the water surface. Under the condition, the coating film is exposed to a water flow at a high temperature, and thus is in a state close to the case where the coating film is acceleratedly exposed to a water flow for a prolonged period of time, and adhesion mainly of plant organisms in the sea, such as seaweed, relatively actively occurs due to the condition and the immersion marine area. After 6 months and after 12 months from the start of the immersion under the condition, the area where plant organisms were attached on the antifouling coating film was measured, and the plant organism resistance test of the antifouling coating film was evaluated according to the following "Evaluation Standard of Antifouling Performance by Plant Organisms Attached Area". The results are shown in Table 3.

### [Evaluation Standard of Antifouling Performance by Plant Organisms Attached Area]

5: The area occupied by plant organisms in total on the test surface was less than 1% of the total area.
4: The area was 1% or more and less than 10% of the total area.
3: The area was 10% or more and less than 30% of the total area.
2: The area was 30% or more and less than 70% of the total area.
1: The area was 70% or more of the total area.

**Table 3**

| | | Example | | | | | | | | | | | | | | | Comparative Example | | |
|---|---|---|---|---|---|---|---|---|---|---|---|---|---|---|---|---|---|---|---|
| | | 1 | 1 2 | 3 | 1 4 | 5 | 6 | 7 | 1 8 | 9 | 10 | 11 | 12 | 13 | 14 | 15 | 1 | 1 2 | 3 |
| <Formulation of coating composition (part by mass)> | | | | | | | | | | | | | | | | | | | |
| (A) | Hydrolyzable polymer solution (A-1) (solid content: 46.5%) | 21.0 | 25.0 | 24.0 | 26.0 | 20.0 | | | | | | | | | | | 24.0 | 24.0 | 24.0 |
| | Hydrolyzable polymer solution (A-2) (solid content: 46.4%) | | | | | | 20.0 | 20.0 | 20.0 | 20.0 | 20.0 | 20.0 | 30.0 | | | | | | |
| | Hydrolyzable polymer solution (A-3) (solid content: 46.4%) | | | | | | | | | | | | | 20.0 | | | | | |
| | Hydrolyzable polymer solution (A-4) (solid content: 45.0%) | | | | | | | | | | | | | | 25.0 | | | | |
| | Hydrolyzable polymer solution (A-5) (solid content: 51.4%) | | | | | | | | | | | | | | | 24.0 | | | |
| (B) | Cuprous oxide 1 | | 20.0 | 40.0 | 25.0 | 42.0 | 46.0 | | | | | | | | 47.0 | | 40.0 | 40.0 | 40.0 |
| | Cuprous oxide 2 | 45.0 | | | | | | 46.0 | 47.0 | 47.0 | | | 45.0 | 45.0 | | 48.0 | | | |
| | Cuprous oxide 3 | | 20.0 | | | | | | | | 46.0 | 50.0 | | | | | | | |
| (C) | Copper pyrithione | 2.5 | 3.0 | 2.0 | 3.0 | 0.6 | 1.0 | 1.0 | 3.0 | 5.0 | 1.0 | 3.0 | 1.5 | 3.0 | 2.0 | 2.0 | 2.0 | | |
| | Zinc pyrithione | | | | | | | | | | | | | | | | | 2.0 | |
| (D) | Medetomidine | 0.10 | 0.10 | 0.10 | 0.20 | 0.15 | 0.10 | 0.10 | 0.10 | 0.05 | 0.10 | 0.50 | 0.10 | 1.00 | 0.10 | 0.10 | | 0.10 | 0.10 |
| (E) | Rosin | 6.5 | 5.0 | 4.0 | 5.0 | 7.0 | 5.0 | 5.0 | | | 5.0 | | | | 3.0 | 2.0 | 4.0 | 4.0 | 4.0 |
| | Versatic acid | | | | | | | | 2.0 | 2.0 | | 2.0 | | 2.0 | | | | | |
| (F) | DCOIT (solid content: 30%) | | | 1.9 | | | | | | | | | | | | | 1.9 | 1.9 | 1.9 |
| (G) | Chlorinated paraffin | 2.0 | 1.5 | 1.5 | 2.0 | 1.0 | | | 2.0 | 2.0 | | | 2.0 | 2.0 | 2.0 | 2.0 | 1.5 | 1.5 | 1.5 |
| | Acrylic resin (containing no metal ester) | | | | | | | | | | | 1.0 | | | | | | | |
| (H) | Red iron oxide | 1.0 | 2.0 | 3.0 | 3.0 | 2.0 | 3.0 | 3.0 | 1.0 | 1.0 | 3.0 | 3.0 | 1.0 | 1.0 | 2.0 | 1.0 | 3.0 | 3.0 | 3.0 |
| | Zinc oxide | 3.0 | 6.0 | 4.0 | 12.0 | 5.0 | 5.0 | 5.0 | 12.0 | 12.0 | 5.0 | 5.5 | 8.0 | 12.0 | 4.0 | 3.0 | 4.0 | 4.0 | 4.0 |
| | Talc | 4.0 | 2.0 | 1.5 | 3.0 | 4.0 | 3.0 | 3.0 | 3.0 | 3.0 | 3.0 | 3.0 | 2.0 | 3.0 | 2.0 | 3.0 | 1.6 | 1.5 | 3.5 |
| | Calcium sulfate | | | | | | | | 0.5 | 0.5 | | 0.5 | | 0.5 | | | | | |
| (I) | Xylene | 9.9 | 10.4 | 13.0 | 15.8 | 13.2 | 12.9 | 12.9 | 5.4 | 3.4 | 12.9 | 5.7 | 5.0 | 6.5 | 9.9 | 11.9 | 13.0 | 13.0 | 13.0 |
| | Propylene glycol monomethyl ether | | | | | | | | 2.0 | 2.0 | | 2.8 | 2.4 | 2.0 | | | | | |
| (J) | Fatty acid amide (solid content: 20%) | 3.0 | 3.0 | 3.0 | 3.0 | 3.0 | 2.0 | 2.0 | 1.0 | 1.0 | 2.0 | 1.0 | 1.0 | 1.0 | 2.0 | 2.0 | 3.0 | 3.0 | 3.0 |
| | Oxidized polyethylene (solid content: 20%) | 2.0 | 2.0 | 2.0 | 2.0 | 2.0 | 2.0 | 2.0 | 1.0 | 1.0 | 2.0 | 2.0 | 2.0 | 1.0 | 1.0 | 1.0 | 2.0 | 2.0 | 2.0 |
| Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| <Calculated values | | | | | | | | | | | | | | | | | | | |
| Content of (A) in solid content of paint (% by mass) | | 13.0 | 16.1 | 16.2 | 18.2 | 12.9 | 12.7 | 12.7 | 11.6 | 11.3 | 12.7 | 11.8 | 18.8 | 11.7 | 15.2 | 16.7 | 16.2 | 16.2 | 16.2 |
| Content of (B) in solid content of paint (% by mass) | | 60.1 | 55.4 | 58.1 | 37.7 | 58.3 | 62.9 | 62.9 | 58.5 | 57.2 | 62.9 | 63.8 | 60.7 | 56.8 | 63.6 | 64.8 | 58.1 | 58.1 | 58.1 |
| Content of (C) in solid content of paint (% by mass) | | 3.3 | 4.2 | 2.9 | 4.5 | 0.8 | 1.4 | 1.4 | 3.7 | 6.1 | 1.4 | 3.8 | 2.0 | 3.8 | 2.7 | 2.7 | 2.9 | 2.9 | 0.0 |
| Content of (D) in solid content of paint (% by mass) | | 0.13 | 0.14 | 0.15 | 0.30 | 0.21 | 0.14 | 0.14 | 0.12 | 0.06 | 0.14 | 0.64 | 0.13 | 1.26 | 0.14 | 0.14 | 0.00 | 0.15 | 0.15 |
| <Evaluation result> | | | | | | | | | | | | | | | | | | | |
| Antifouling test (1) 6 months | | 5 | 5 | 5 | 5 | 5 | 5 | 5 | 5 | 4 | 5 | 5 | 5 | 5 | 4 | 4 | 3 | 3 | 5 |
| ditto 12 months | | 5 | 5 | 5 | 5 | 5 | 4 | 5 | 5 | 3 | 4 | 5 | 4 | 5 | 3 | 3 | 1 | 3 | 5 |
| Antifouling test (2) 6 months | | 5 | 4 | 5 | 5 | 3 | 5 | 5 | 4 | 5 | 4 | 4 | 4 | 4 | 4 | 4 | 5 | 1 | 2 |
| ditto 12 months | | 4 | 4 | 4 | 4 | 4 | 5 | 4 | 4 | 4 | 3 | 4 | 3 | 4 | 4 | 3 | 5 | 1 | 1 |

It was apparent from the results of Examples and Comparative Examples that according to the antifouling coating composition of the present invention, an excellent antifouling performance was shown against fouling by various organisms even after exposure to a high-speed water flow for a prolonged period of time.

## Claims

1. An antifouling coating composition comprising:
a hydrolyzable polymer (A) containing a metal ester group,
cuprous oxide (B),
a copper pyrithione (C), and
medetomidine (D),
wherein the content of the hydrolyzable polymer (A) in the solid content of the antifouling coating composition is from 8 to 20% by mass,
the content of the cuprous oxide (B) in the solid content of the antifouling coating composition is from 35 to 65% by mass,
the content of the copper pyrithione (C) in the solid content of the antifouling coating composition is from 0.5 to 7% by mass,
the content of the medetomidine (D) in the solid content of the antifouling coating composition is from 0.02 to 2% by mass, and
the hydrolyzable polymer (A) contains at least one selected from the group consisting of a polymer (A1') having a constituent unit derived from a polymerizable compound represented by the following formula (1-1') and a polymer (A2') having a constituent unit derived from a polymerizable compound represented by the following formula (1-2'): 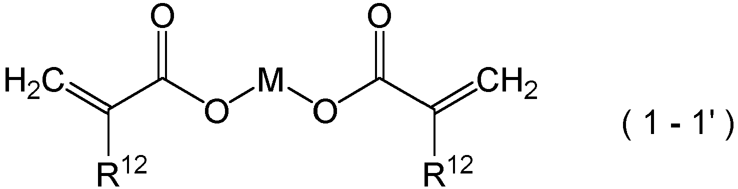 wherein R¹² each independently represent a hydrogen atom or a methyl group; and M represents copper or zinc, 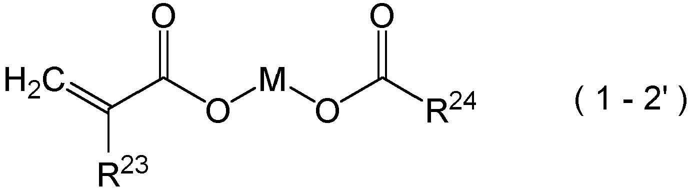 wherein R²³ represents a hydrogen atom or a methyl group; R²⁴ represents a monovalent organic group having 1 to 30 carbon atoms containing no terminal ethylenically unsaturated group; and M represents copper or zinc.

2. The antifouling coating composition according to claim 1, further comprising a monocarboxylic acid compound (E) and/or a metal ester thereof.

3. An antifouling coating film, which is formed with the antifouling coating composition according to claim 1or 2.

4. A substrate with an antifouling coating film, the substrate being coated with the antifouling coating film according to claim 3.

5. A method for producing a substrate with an antifouling coating film, comprising:
(I) a step of providing an applied material or an impregnated material by applying the antifouling coating composition according to claim 1or 2 on a substrate or impregnating a substrate with the antifouling coating composition according to claim 1 or 2; and
(II) a step of drying the applied material or the impregnated material.

6. A method for producing a substrate with an antifouling coating film, comprising:
(i) a step of forming an antifouling coating film by drying the antifouling coating composition according to claim 1 or 2; and
(ii) a step of attaching the antifouling coating film to a substrate.

7. An antifouling method using the antifouling coating film according to claim 3 comprising coating the surface of a substrate with the antifouling coating film.

## Patentansprüche

1. Antifoulingbeschichtungszusammensetzung, umfassend:
eine hydrolysierbares Polymer (A), das eine Metallestergruppe enthält,
Kupfer(I)oxid (B),
ein Kupferpyrithion (C) und
Medetomidin (D),
wobei der Gehalt des hydrolysierbaren Polymers (A) im Feststoffgehalt der Antifoulingbeschichtungszusammensetzung 8 bis 20 Masse-% beträgt,
der Gehalt des Kupfer(I)oxids (B) im Feststoffgehalt der Antifoulingbeschichtungszusammensetzung 35 bis 65 Masse-% beträgt,
der Gehalt des Kupferpyrithions (C) im Feststoffgehalt der Antifoulingbeschichtungszusammensetzung 0,05 bis 7 Masse-% beträgt,
der Gehalt des Medetomidins (D) im Feststoffgehalt der Antifoulingbeschichtungszusammensetzung 0,02 bis 2 Masse-% beträgt und
das hydrolysierbare Polymer (A) mindestens eines, ausgewählt aus der Gruppe, bestehend aus einem Polymer (A1') mit einer konstituierenden Einheit, die sich von einer durch die folgende Formel (1-1') dargestellten polymerisierbaren Verbindung ableitet, und einem Polymer (A2') mit einer konstituierenden Einheit, die sich von einer durch die folgende Formel (1-2') dargestellten polymerisierbaren Verbindung ableitet: 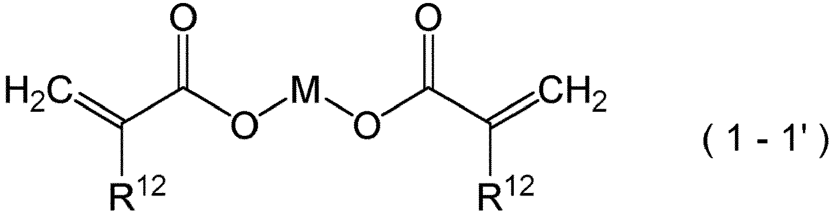
worin R¹² jeweils ein Wasserstoffatom oder eine Methylgruppe darstellt und M Kupfer oder Zink darstellt, 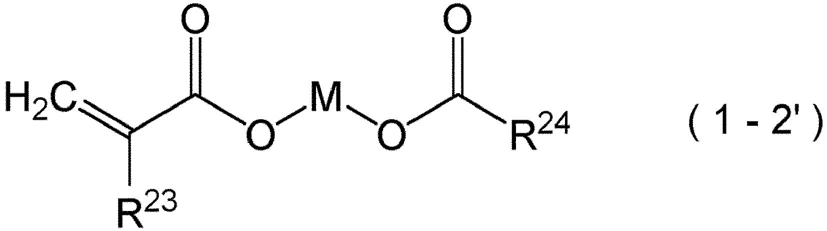
worin R²³ ein Wasserstoffatom oder eine Methylgruppe darstellt, R²⁴ eine einwertige organische Gruppe mit 1 bis 30 Kohlenstoffatomen, die keine endständige ethylenisch ungesättigte Gruppe enthält, darstellt und M Kupfer oder Zink darstellt.

2. Antifoulingbeschichtungszusammensetzung gemäß Anspruch 1, ferner umfassend eine Monocarbonsäureverbindung (E) und/oder einen Metallester davon.

3. Antifoulingbeschichtungsfilm, der mit der Antifoulingbeschichtungszusammensetzung gemäß Anspruch 1 oder 2 gebildet ist.

4. Substrat mit einem Antifoulingbeschichtungsfilm, wobei das Substrat mit dem Antifoulingbeschichtungsfilm gemäß Anspruch 3 beschichtet ist.

5. Verfahren zur Herstellung eines Substrats mit einem Antifoulingbeschichtungsfilm, umfassend:
(I) einen Schritt zum Bereitstellen eines aufgetragenen Materials oder eines imprägnierten Materials durch Auftragen der Antifoulingbeschichtungszusammensetzung gemäß Anspruch 1 oder 2 auf ein Substrat oder Imprägnieren eines Substrats mit der Antifoulingbeschichtungszusammensetzung gemäß Anspruch 1 oder 2 und
(II) einen Schritt zum Trocknen des aufgetragenen Materials oder des imprägnierten Materials.

6. Verfahren zur Herstellung eines Substrats mit einem Antifoulingbeschichtungsfilm, umfassend:
(i) einen Schritt zum Bilden eines Antifoulingbeschichtungsfilms durch Trocknen der Antifoulingbeschichtungszusammensetzung gemäß Anspruch 1 oder 2 und
(ii) einen Schritt zum Anbringen des Antifoulingbeschichtungsfilms an ein Substrat.

7. Antifoulingbeschichtungsverfahren unter Verwendung des Antifoulingbeschichtungsfilms gemäß Anspruch 3, umfassend das Beschichten der Oberfläche eines Substrats mit dem Antifoulingbeschichtungsfilm.

## Revendications

1. Composition de revêtement antisalissure, comprenant :
un polymère (A) hydrolysable contenant un groupe ester de métal,
de l'oxyde de cuivre (B),
un pirithione de cuivre (C), et
une médétomidine (D)
dans laquelle la teneur en polymère hydrolysable (A) dans le contenu solide de la composition de revêtement antisalissure est comprise entre 8 et 20 % en masse,
la teneur en oxyde de cuivre (B) dans le contenu solide de la composition de revêtement antisalissure est comprise entre 35 et 65 % en masse,
la teneur en pyrithione de cuivre (C) dans le contenu solide de la composition de revêtement antisalissure est comprise entre 0,5 et 7 % en masse,
la teneur en médétomidine (D) dans le contenu solide de la composition de revêtement antisalissure est comprise entre 0,02 et 2 % en masse, et
le polymère hydrolysable (A) contient au moins un élément sélectionné parmi le groupe composé d'un polymère (A1') qui présente une unité constituante dérivée d'un composé polymérisable représenté par la formule (1-1') suivante et un polymère (A2') qui présente une unité constituante dérivée d'un composé polymérisable représenté par la formule (1-2') suivante : 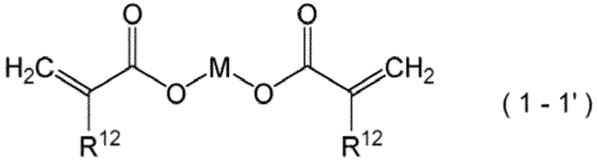 dans laquelle R¹² représentent chacun de façon indépendante un atome d'hydrogène ou un groupe méthyle ; et M représente le cuivre ou le zinc, 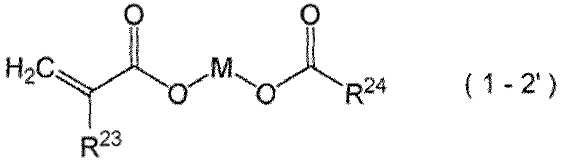 dans laquelle R²³ représente un atome d'hydrogène ou un groupe méthyle ; R²⁴ représente un groupe organique monovalent présentant de 1 à 30 atomes de carbone ne contenant aucun groupe terminal éthyléniquement insaturé ; et M représente le cuivre ou le zinc.

2. Composition de revêtement antisalissure selon la revendication 1, comprenant en outre un composé d'acide monocarboxylique (E) et/ou un ester métallique de celui-ci.

3. Film de revêtement antisalissure formé avec la composition de revêtement antisalissure selon la revendication 1 ou la revendication 2.

4. Substrat pourvu d'un film de revêtement antisalissure, le substrat étant revêtu avec le film de revêtement antisalissure selon la revendication 3.

5. Procédé de production d'un substrat pourvu d'un film de revêtement antisalissure, comprenant :
(I) une étape consistant à fournir un matériau appliqué ou un matériau imprégné en appliquant la composition de revêtement antisalissure selon la revendication 1 ou la revendication 2 à un substrat ou en imprégnant un substrat avec la composition de revêtement antisalissure selon la revendication 1 ou la revendication 2 ; et
(II) une étape consistant à faire sécher le matériau appliqué ou le matériau imprégné.

6. Procédé de production d'un substrat pourvu d'un film de revêtement antisalissure, comprenant :
(i) une étape consistant à former un film de revêtement antisalissure en faisant sécher la composition de revêtement antisalissure selon la revendication 1 ou 2 ; et
(ii) une étape consistant à attacher le film de revêtement antisalissure à un substrat.

7. Procédé antisalissure utilisant le film de revêtement antisalissure selon la revendication 3, comprenant le revêtement de la surface d'un substrat avec le film de revêtement antisalissure.
